# EUROPEAN PATENT APPLICATION

(11) **EP 2 538 374 A2**
(43) Date of publication of application: **26.12.2012**
(21) Application number: 11777182.4
(22) Date of filing: 09.05.2011
(51) Int. Cl.: G06K 19/07

(54) **MANAGEMENT METHOD FOR INFORMATION OF UNIVERSAL INTEGRATED CIRCUIT CARD AND DEVICE THEREOF**

(71) Applicant: Huawei Device Co., Ltd., Shenzhen, Guangdong 518129 (CN)
(72) Inventor: WANG, Heyong, Shenzhen Guangdong 518129 (CN)
(74) Representative: Maiwald Patentanwalts GmbH
(86) International application number: PCT/CN2011/073830
(87) International publication number: WO 2011/137763

(57) **Abstract**

The present invention relates to a method and a device for managing information of a universal integrated circuit card. The method includes: acquiring an integrate circuit card identity (ICCID) of a universal integrated circuit card (UICC); determining a database corresponding to the ICCID; acquiring information of the UICC; and storing and updating the information of the UICC into the database corresponding to the ICCID. Through the method and a device for managing information of a universal integrated circuit card accoding to the present invention, information of different UICCs is stored in different databases according to ICCIDs of the UICCs, so as to conveniently manage information of different universal integrated circuit cards.

## Description

### FIELD OF THE INVENTION

The present invention relates to the field of information management technologies, and in particular, to a method and a device for managing information of a universal integrated circuit card.

### BACKGROUND OF THE INVENTION

After devices such as a UICC (Universal Integrated Circuit Card, universal integrated circuit card) and a PC (Personal Computer, personal computer) are connected, the PC may acquire information on the UICC and deposit the information onto the PC, and the information on the UICC may be deleted.

However, in a case of multiple UICCs, the PC does not distinguish different UICCs, but saves all information on the different UICCs in a database, so when a user views information on the PC, it is difficult to judge which UICC the information belongs to and it is impossible to implement a management operation on information of different UICCs.

### SUMMARY OF THE INVENTION

The objective of the present invention is to provide a method and a device for managing information of a universal integrated circuit card, thereby distinguishing different universal integrated circuit cards so as to manage the information.

The objective of the present invention is achieved through the following technical solutions:
A method for managing information of a universal integrated circuit card, includes:
   acquiring an integrate circuit card identity ICCID of a universal integrated circuit card UICC and determining a database corresponding to the ICCID; and
   acquiring information of the UICC and storing and updating the information of the UICC into the database corresponding to the ICCID.
A device for managing information of a universal integrated circuit card, includes:
   an acquiring unit, configured to acquire an integrate circuit card identity ICCID of a universal integrated circuit card UICC and acquire information of the UICC;
   a determination unit, configured to determine whether the ICCID has a corresponding database; and
   a management unit, configured to, if the determination unit determines that the ICCID has the corresponding database, store and update the information of the UICC acquired by the acquiring unit into the database corresponding to the ICCID.

It can be seen from the technical solutions provided by the present invention that information of different UICCs is saved in different databases according to ICCIDs of the UICCs so as to conveniently manage the information of different universal integrated circuit cards.

### BRIEF DESCRIPTION OF THE DRAWINGS

FIG. 1 is a schematic diagram of a method managing for information of a universal integrated circuit card according to an embodiment of the present invention;
FIG. 2 is a first schematic structural diagram of a device for managing information of a universal integrated circuit card according to an embodiment of the present invention;
FIG. 3 is a second schematic structural diagram of the device for managing information of a universal integrated circuit card according to an embodiment of the present invention; and
FIG. 4 is a schematic diagram of an application scenario of the method for managing information of a universal integrated circuit card according to an embodiment of the present invention.

### DETAILED DESCRIPTION OF THE EMBODIMENTS

The embodiments of the present invention are further described in detail below with reference to the accompanying drawings.

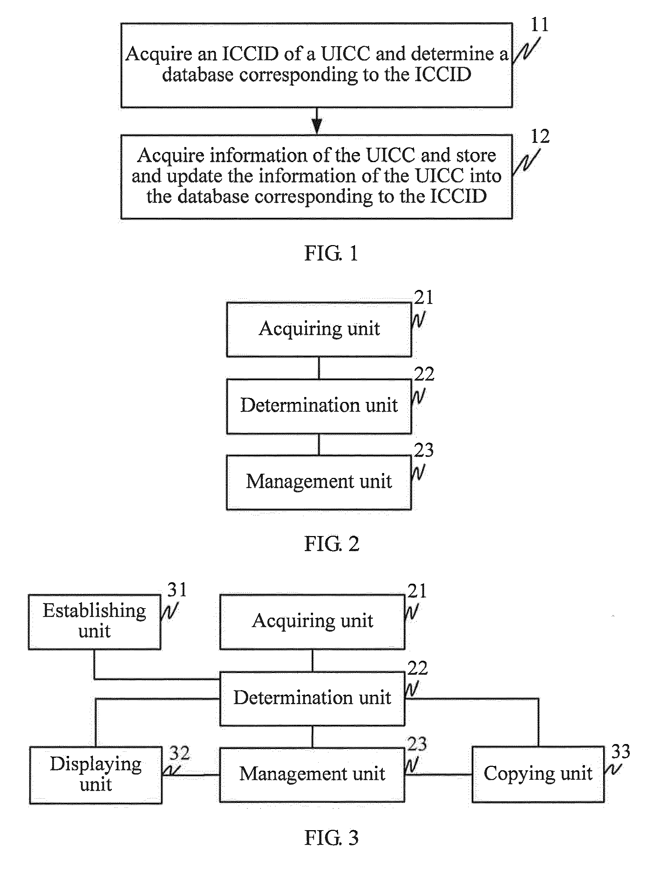

As shown in FIG. 1, an embodiment of the present invention provides a method for managing information of a universal integrated circuit card, including the following steps:
11: Acquire an ICCID (Integrate circuit card identity, integrate circuit card identity) of a UICC (Universal Integrated Circuit Card, universal integrated circuit card) and determine a database corresponding to the ICCID.
12: Acquire information of the UICC and store and update the information of the UICC into the database corresponding to the ICCID.

An executive subject of the method for managing information of a universal integrated circuit card of the embodiment of the present invention may include a PC (Personal Computer, personal computer).

The UICC may be usually connected to the devices such as a PC through mobile terminals such as a wireless network card (namely, a data card), or a card reader, or a mobile phone, and the UICC has a unique identity ICCID and may distinguish different UICCs through the ICCID.

The UICC may include an SIM (Subscriber Identity Module, subscriber identity module) card, or a USIM (Universal Subscriber Identity Module, universal subscriber identity module) card, or a UIM (User Identity Module, user identity module) card, and so on.

The mobile terminals such as the wireless network card or the mobile phone may be connected to the devices such as the PC, to implement wireless communication such as 2G (2nd-Generation, 2nd-generation mobile communication) or 3G (3rd-Generation, 3rd-generation mobile communication), or LTE (Long Term Evolution, long term evolution).

Background software or a background module may be installed in the devices such as the PC, and information of the UICC is read through an interface command stipulated by a protocol and is saved on the devices such as the PC. For example, the PC delivers an instruction to the wireless network card through an AT command (ATention Command) and reads the information of the UICC.

Moreover, the devices such as the PC may read the ICCID of the UICC through the interface command stipulated by the protocol. For example, the PC delivers an instruction to the wireless network card through an AT command and reads the ICCID of the UICC.

It can be seen from the technical solution provided by the present invention that the information stored on different UICCs is saved in different databases according to the ICCIDs of the UICCs, and an association between a UICC and a database that stores information of the UICC is implemented through the ICCID as an index. When a user views the information of the UICC, it is very easy to judge which UICC the information of the UICC belongs to, so as to conveniently manage information of different universal integrated circuit cards.

Alternatively, in the method for managing information of a universal integrated circuit card of the embodiment of the present invention, the information of the UICC may include at least one of information stored by the UICC itself and information associated with the UICC.

Specifically alternatively, the information stored by the UICC itself may include information such as a short message, and a phone directory.

The information associated with the UICC may include user setting information associated with the UICC such as network search setting information, dial-up access control information, and information such as network traffic used by the UICC.

It can be seen that, the method for managing information of a universal integrated circuit card in the embodiment of the present invention not only manages the information stored by the UICC itself, but also may manage various information associated with the UICC.

Alternatively, after the ICCID of the UICC is acquired in step 11, the method for manging information of a universal integrated circuit card in the embodiment of the present invention may also include:
establishing a corresponding database for the ICCID if it is determined that the ICCID has no corresponding database.

It can be seen that, after the ICCID of the UICC is acquired, a database may be queried according to the ICCID to judge whether the ICCID has the corresponding database. As regards a new UICC, because the ICCID of the new UICC has no database that associatedly stores the information of the UICC, namely, the database corresponding to the ICCID does not exist, a corresponding database is established for the ICCID of the new UICC so that a new UICC implements an association with the database through the ICCID of the new UICC.

Furthermore, after the database corresponding to the ICCID is determined in step 11, the method for managing information of a universal integrated circuit card in the embodiment of the present invention may also include:
displaying the information of the UICC in the database corresponding to the ICCID.

It can be seen that, after the database corresponding to the ICCID is determined, the information of the UICC in the database corresponding to the ICCID may be displayed so as to facilitate operations of the user such as viewing and management. Moreover, that only the information of the UICC in the database corresponding to the ICCID is displayed heremeans that no other information of the UICC is exposed, thereby ensuring the privacy of the information of the UICC.

Further, after the information of the UICC is stored and updated into the database corresponding to the ICCID in step 12, the method for managing information of a universal integrated circuit card in the embodiment of the present invention may also include:
displaying the stored and updated information of the UICC in the database corresponding to the ICCID.

It can be seen that, after the information of the UICC is stored and updated into the database corresponding to the ICCID, the stored and updated information of the UICC in the database corresponding to the ICCID is displayed so as to facilitate operations of the user such as viewing and management. Moreover, that only the information of the UICC in the database corresponding to the ICCID is displayed means that no other information of the UICC is exposed, thereby ensuring the privacy of the information of the UICC.

Alternatively, the method for managing information of a universal integrated circuit card in the embodiment of the present invention may also include:
copying and storing the information of the UICC in the database corresponding to the ICCID into the UICC.

Specifically, not only after the database corresponding to the ICCID is determined, the information of the UICC in the database corresponding to the ICCID may be copied and stored into the UICC, but also after the information of the UICC is stored and updated into the database corresponding to the ICCID, the information of the UICC in the database corresponding to the ICCID may be copied and stored into the UICC.

Exemplarily, because the information on the UICC may be deleted, the information of the UICC in the database corresponding to the ICCID of the UICC may be copied and stored into the UICC so as to ensure the synchronization of the information of the UICC. If the UICC is further connected to other PCs, the information of the UICC may be further stored into other PCs.

It can be seen that, not only the information of the UICC may be stored and updated into the database corresponding to the ICCID of the UICC so as to manage information of different UICCs, but also the information of the UICC in the database corresponding to the ICCID may be conveniently synchronized (copied and stored) into the UICC. In this way, after the information stored on the UICC is deleted, the information of the UICC in the database corresponding to the ICCID may still be copied and stored into the UICC through the database corresponding to the ICCID.

As shown in FIG. 2, corresponding to the above method for managing information of a universal integrated circuit card in the embodiment described, an embodiment of the present invention provides a device for managing information of a universal integrated circuit card, including:
an acquiring unit 21, configured to acquire an ICCID of a UICC and acquire information of the UICC;
a determination unit 22, configured to determine whether the ICCID has a corresponding database; and
a management unit 23, configured to, if the determination unit 22 determines that the ICCID has the corresponding database, store and update the information of the UICC acquired by the acquiring unit 21 into the database corresponding to the ICCID.

The device for managing information of a universal integrated circuit card in the embodiment of the present invention may be a background module, which may be independently set or set by being integrated with a PC.

It can be seen from the technical solution provided by the present invention that information stored on different UICCs is saved in different databases according to ICCIDs of the UICCs, and an association between a UICC and a database that stores information of the UICC is implemented through an ICCID as an index. In the case that the user views the information of the UICC, it is very easy to judge which UICC the information of the UICC belongs to, so as to conveniently manage information of different universal integrated circuit cards.

Alternatively, the information of the UICC acquired by the acquiring unit 21 may include: at least one of information stored by the UICC itself and information associated with the UICC.

Specifically alternatively, the information stored by the UICC itself may include information such as a short message, and a phone directory.

The information associated with the UICC may include user setting information associated with the UICC such as network search setting information, and dial-up access control information, and information such as network traffic used by the UICC.

The device for managing information of a universal integrated circuit card in the embodiment of the present invention further includes:
a storing unit, configured to store the database corresponding to the ICCID.

As shown in FIG. 3, alternatively, the device for managing information of a universal integrated circuit card in the embodiment of the present invention may also include:
an establishing unit 31, configured to establish a corresponding database for the ICCID if the determination unit 22 determines that the ICCID has no corresponding database.

Alternatively, the device for managing information of a universal integrated circuit card in the embodiment of the present invention may also include:
a displaying unit 32, configured to display the information of the UICC in the database corresponding to the ICCID after the determination unit 22 determines the database corresponding to the ICCID; and further configured to display the stored and updated information of the UICC in the database corresponding to the ICCID after the management unit 23 stores and updates the information of the UICC into the database corresponding to the ICCID.

Alternatively, the device for managing information of a universal integrated circuit card in the embodiment of the present invention may also include:
a copying unit 33, configured to copy and store, in the UICC, the information of the UICC in the database corresponding to the ICCID.

Specifically, not only after the database corresponding to the ICCID is determined, the information of the UICC in the database corresponding to the ICCID may be copied and stored in the UICC, but also after the information of the UICC is stored and updated into the database corresponding to the ICCID, the information of the UICC in the database corresponding to the ICCID may be copied and stored in the UICC.

The device for managing information of a universal integrated circuit card and component parts of the device in the embodiment of the present invention may be understood with reference to similar content of the method for managing information of a universal integrated circuit card of the foregoing embodiment so that the details are not described here again.

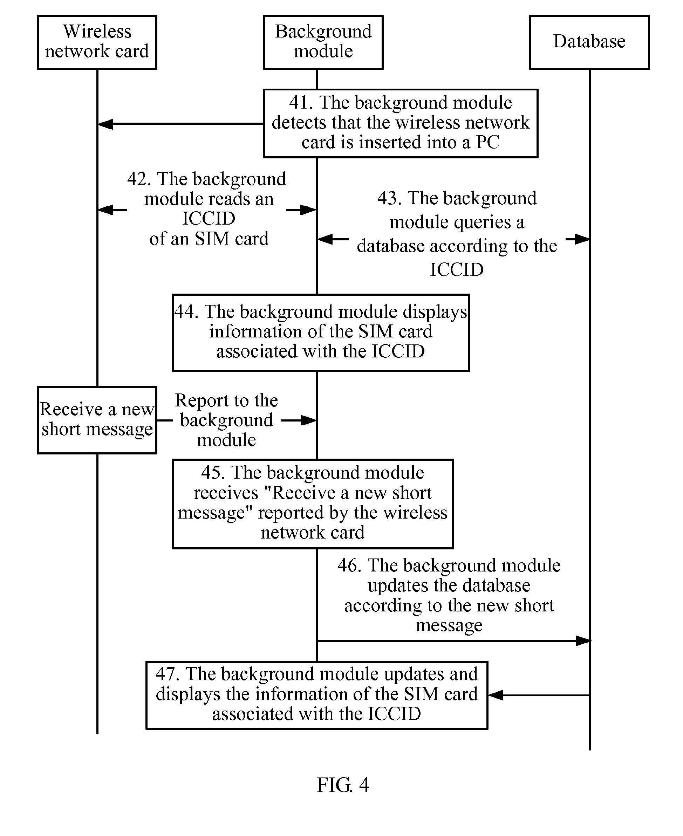

As shown in FIG. 4, by taking a universal integrated circuit card being an SIM card in a wireless network card and a device for managing information of a universal integrated circuit card being a background module in a PC as an example, a method for managing information of a universal integrated circuit card in an embodiment of the present invention is described, including the following steps:
41: The background module detects that the wireless network card is inserted into the PC.

In the case that the wireless network card is inserted into the PC, the background module can detect the insertion. The information such as the short message and the phone directory is stored in the SIM card in the wireless network card.
42: The background module reads an ICCID of the SIM card.

Each SIM card has a unique ICCID and the background module reads the ICCID of the SIM card.
43: The background module queries a database according to the ICCID.

The background module queries the database according to the ICCID. The database stores information of SIM cards categorized according to ICCIDs, namely, information of the same SIM card is stored in the same ICCID and an association between an SIM card and a database that stores information of the SIM card is implemented through an ICCID as an index, and the background module determines the database that stores the information of the SIM card and is associated with the ICCID.
44: The background module displays the information of the SIM card associated with the ICCID.

The background module displays the information of the SIM card in the database and provides the information to the user.

If in step 43 the background module queries the database according to the ICCID and no database corresponding to the ICCID exists, in this step, a database used for storing the information of the SIM card is establish for the ICCID.
45: The background module receives "Receive a new short message" reported by the wireless network card.

The wireless network card receives a new short message which is stored in the SIM card and the wireless network card reports "Receive a new short message" to the background module.
46: The background module updates the database according to the new short message.

The background module stores the new short message into the database corresponding to the ICCID, namely, updates the stored information of the SIM card.
47: The background module updates and displays the information of the SIM card associated with the ICCID.

The background module updates and displays the information of the SIM card associated with the ICCID, and provides the information to the user.

The method for managing information of a universal integrated circuit card in the embodiment of the present invention, after step 47, may also include the following step:

The background module copies and stores, in the SIM card, the information of the SIM card stored in the database and implements the information synchronization.

In the method for managing information of a universal integrated circuit card in the embodiment of the present invention, information of the same SIM card is stored in the same ICCID. Not only may the information of the SIM card be stored and updated into the database corresponding to the ICCID so as to manage information of different SIM cards, but also the information of the SIM card in the database corresponding to the ICCID may be conveniently synchronized to the SIM card.

The method for managing information of a universal integrated circuit card in the embodiment of the present invention is also applicable to management of phone directory information and short message draft information of different SIM cards, and so on.

Exemplarily, in the method for managing information of a universal integrated circuit card in the embodiment of the present invention, if the current user has two SIM cards, an SIM_A and an SIM_B, and if the SIM_A is used to be inserted into the wireless network card and is connected to the PC, the background module firstly acquires an ICCID_A of the SIM_A, and then establishes an information database according to the ICCID_A and synchronously records the data associated with the SIM_A in the database of the ICCID_A index, such as other data card information of a short message, a phone directory, a dialing parameter, and a network search setting parameter and so on.

If the SIM_A is taken out, and the SIM_B is used to be inserted into the wireless network card and is connected to the PC, the background module reads an ICCID_B of the SIM_B; if it is found that the ICCID_B has no information saved in the database, a database of the ICCID_B index is recreated to store information associated with the SIM_B.

Subsequently, if the SIM_A is inserted into the wireless network card and connected to the PC again, and if the background reads the ICCID_A from the SIM_A and knows that the background has already had the database of the ICCID_A index, the data associated with the ICCID_A is listed to be displayed for the user. If the SIM_A is in use, a short message received by the user and created information are both saved in the database of the ICCID_A index. Or, the user may conveniently copy the relevant data in the database of the ICCID_A index into the SIM_A, thus achieving the purpose of the information synchronization of the SIM card.

It can be seen from the technical solution provided by the present invention that the information stored on different UICCs is stored in different databases according to ICCIDs of the UICCs; if the user views information of a UICC, it is very easy to judge which UICC the information of the UICC belongs to, so as to conveniently manage information of different universal integrated circuit cards.

Persons skilled in the art may understand that all or part of the processes of the method according to the embodiments of the present invention may be implemented by a program indicating relevant hardware. The program may be stored in a computer readable storage medium. If the program is executed, the program may include the processes of the method according to the embodiment. The storage medium may be a magnetic disk, an optical disk, a Read-Only Memory (Read-Only Memory, ROM) or a Random Access Memory (Random Access Memory, RAM).

## Claims

1. A method for managing information of a universal integrated circuit card, comprising:
acquiring an integrate circuit card identity ICCID of a universal integrated circuit card UICC and determining a database corresponding to the ICCID; and
acquiring information of the UICC and storing and updating the information of the UICC into the database corresponding to the ICCID.

2. The method according to claim 1, wherein the information of the UICC comprises:
at least one of information stored by the UICC itself and information associated with the UICC.

3. The method according to claim 1, after the acquiring the ICCID of the UICC, further comprising:
establishing a corresponding database for the ICCID if it is determined that the ICCID has no corresponding database.

4. The method according to claim 1, further comprising:
displaying the information of the UICC in the database corresponding to the ICCID after the determining the database corresponding to the ICCID; and
displaying stored and updated information of the UICC in the database corresponding to the ICCID after the storing and updating the information of the UICC into the database corresponding to the ICCID.

5. The method according to claim 1, further comprising:
copying and storing, in the UICC, the information of the UICC in the database corresponding to the ICCID.

6. A device for managing information of a universal integrated circuit card, comprising:
an acquiring unit, configured to acquire an integrate circuit card identity ICCID of a universal integrated circuit card UICC and acquire information of the UICC;
a determination unit, configured to determine whether the ICCID has a corresponding database; and
a management unit, configured to, if the determination unit determines that the ICCID has the corresponding database, store and update the information of the UICC acquired by the acquiring unit into the database corresponding to the ICCID.

7. The device according to claim 6, wherein the information of the UICC acquired by the acquiring unit comprises:
at least one of information stored by the UICC itself and information associated with the UICC.

8. The device according to claim 6, further comprising:
an establishing unit, configured to establish a corresponding database for the ICCID if the determination unit determines that the ICCID has no corresponding database.

9. The device according to claim 6, further comprising:
a displaying unit, configured to display the information of the UICC in the database corresponding to the ICCID after the determination unit determines the database corresponding to the ICCID; and further configured to display stored and updated information of the UICC in the database corresponding to the ICCID after the management unit stores and updates the information of the UICC into the database corresponding to the ICCID.

10. The device according to claim 6, further comprising:
a copying unit, configured to copy and store, in the UICC, the information of the UICC in the database corresponding to the ICCID after the determination unit determines the database corresponding to the ICCID.
